# EUROPEAN PATENT APPLICATION

(11) **EP 1 575 248 A1**
(43) Date of publication of application: **14.09.2005**
(21) Application number: 05005041.8
(22) Date of filing: 08.03.2005
(51) Int. Cl.: H04M 1/02, H04M 1/23

(54) **Portable and foldable information terminal**

(30) Priority: 08.03.2004 JP 2004064887
(71) Applicant: NEC CORPORATION, Tokyo (JP)
(72) Inventor: Tamura, Kengo, Minato-ku Tokyo (JP)
(74) Representative: Glawe, Delfs, Moll

(57) **Abstract**

A folding-type mobile phone terminal includes a lower unit (10) and an upper unit (12) which are hinged to each other by a universal hinge unit (14). A lower casing (10) of the lower unit (10) has a manipulation board (16A) at a front wall face thereof, and a manipulation system (26, 27, 28) provided at a side wall face thereof. An upper casing (32) of the upper unit (12) has a display panel (36) provided at an inner wall face (32A) thereof, and the display panel is controlled by the manipulation board and the manipulation system. By the universal hinge unit, the second unit can occupy at least at a closed position at which the second unit is superimposed on the first unit such that the display panel is viewable, and at an opened position at which both the manipulation board and the display panel are viewable.

## Description

### BACKGROUND OF THE INVENTION

### Field of the Invention

The present invention relates to a folding-type mobile phone terminal including a lower unit having a manipulation board, and an upper unit having a main display.

### Description of the Related Art

Recently, in such a folding type mobile phone terminal, an upper unit is hinged to a lower unit by a universal hinge unit or two-shaft type hinge unit. Thus, the upper unit can be folded and superimposed on a manipulation board of the lower unit such that a main display of the upper unit is viewable to a user. In this case, it is impossible to manipulate various keys on the manipulation board while viewing the main display, because the manipulation board of the lower unit is covered with the upper unit.

In order to resolve this problem, it is proposed that some manipulation keys are arranged on the wall face of the upper unit on which the main display is provided, as disclosed in, for example, JP-A-2001-251406, JP-A-2002-118633, JP-A-2003-174495 and JP-A-2003-304316.

Also, JP-A-H11-215218 proposes that the upper unit has a smaller size than that of the lower unit so that a part of the manipulation board of the lower unit is exposed when the upper unit can be folded and superimposed on the manipulation board. Namely, it is possible to control the main display by manipulating some keys provided on the exposed part of the manipulation board.

Nevertheless, these prior art references fail to broaden a displaying area of the main display due to the arrangement of the manipulation keys on the wall face of the upper unit on which the main display is provided.

### SUMMARY OF THE INVENTION

Therefore, an object of the present invention is to provide a folding type mobile phone terminal, which is constituted such that the main display can be controlled without restricting a freedom of design on the main display when the upper unit is folded and superimposed on the manipulation board of the lower.

In accordance with an aspect of the present invention, there is provided a folding-type mobile phone terminal comprising a first unit including a first casing having a manipulation board at a front wall face thereof and a manipulation system provided at a side wall face, a second unit including a second casing having a display panel provided at an inner wall face thereof, the display panel being controlled by manipulating the manipulation board and the manipulation system, and a universal hinge unit that hinges the first and second units to each other, such that the second unit can be at least occupy at a closed position at which the second unit is superimposed on the first unit such that the display panel is viewable, and at an opened position at which both the manipulation board and the display panel are viewable.

The manipulation system is associated with a first switch, a second switch, and a third switch so as to independently operate the first, second and third switches. Preferably, the manipulation system includes first, second and third keys that operate the respective first, second third switches.

The folding-type mobile phone terminal may further comprises a position detection system that detects a relative position of the first unit with respect to the second unit, and a display control system that controls the display panel by operating the first, second and third switches, a control manner of the display panel by the display control system being different in accordance with a detection result of the position detection system.

Preferably, when the opened position is detected as the relative position of the first unit with respect to the second unit by the position detection system, items are displayed on the display panel in a two-dimensional manner by operating the first switch. Also, when the closed position is detected as the relative position of the first unit with respect to the second unit by the position detection system, the items are displayed on the display panel in a one-dimensional manner by operating the first switch.

In this case, each of the second and third switches may function as a shift switch for shifting a cursor, which is displayed on the display panel to select one of the items. Preferably, the second and third switches are provided for shifting the cursor in two directions opposite to each other on the display panel. The second and third switches may function as respective up-shift and down-shift switches for shifting the cursor upward and downward on the display panel.

Preferably, the display control system includes a scroll system that scrolls a screen of the display unit by operating one of the second and third switches when the cursor is at an endmost position in a corresponding direction of the directions on the display panel.

The manipulation board of the first casing may be provided with a shift/determination key which is associated with a determination switch, and at least two shift switches, to thereby control the display panel. In this case, the first, second and third switches may have the same functions as the determination switch and the two shift switch, when the opened position is detected as the relative position of the first unit with respect to the second unit by the position detection system.

### BRIEF DESCRIPTION OF THE DRAWINGS

The above objects and other objects will be more clearly understood from the description set forth below, with reference to the accompanying drawings, wherein:
Figure 1 is a top view of an embodiment of a folding-type mobile phone terminal according to the present invention, in which an upper unit of the phone terminal is shown at a first closed position with respect to a lower unit hinged to the upper unit by a two-shaft type high unit;
Figure 2 is a top view of the folding-type mobile phone terminal according to the present invention, in which the upper unit is shown at a first opened position with respect to the lower unit;
Figure 3 is a top view of the folding-type mobile phone terminal according to the present invention, in which the upper unit is shown at a second closed position with respect to the lower unit;
Figure 4 is a bottom view of the folding-type mobile phone terminal according to the present invention, in which the upper unit is shown at a second opened position with respect to the lower unit;
Figure 5 is a top view of the folding-type mobile phone terminal according to the present invention, in which the upper unit is shown at a first right-angle position with respect to the lower unit;
Figure 6 is a top view of the folding-type mobile phone terminal according to the present invention, in which the upper unit is shown at a second right-angle position with respect to the lower unit;
Figure 7 is a perspective view of the two-shaft type hinge unit for hinging the lower and upper units of the mobile phone terminal to each other;
Figure 8 is a bottom view of the two-shaft type hinge unit;
Figure 9 is a top view of the lower unit of the mobile phone terminal from which the upper unit is omitted;
Figure 10 is a top view of the upper unit of the mobile phone terminal from which the lower unit is omitted;
Figure 11 is an explanatory view for explaining a relative positional relationship between magnetic sensors provided in the lower unit and permanent magnets provided in the upper unit when the upper unit is at the first opened position with respect to the lower unit as shown in Fig. 2;
Figure 12 is an explanatory view for explaining another relative positional relationship between the magnetic sensors and the permanent magnets when the upper unit is at the second closed position with respect to the lower unit as shown in Fig. 3;
Figure 13 is an explanatory view for explaining yet another relative positional relationship between the magnetic sensors and the permanent magnets when the upper unit is at the first right-angle position with respect to the lower unit as shown in Fig. 5;
Figure 14 is an explanatory view for explaining still yet another relative positional relationship between the magnetic sensors and the permanent magnets when the upper unit is at the second right-angle position with respect to the lower unit as shown in Fig. 6;
Figure 15 is a block diagram of the first embodiment of the folding-type mobile phone terminal according to the present invention;
Figure 16 is a flowchart of a position detection routine executed in a system control section shown in Fig. 15;
Figure 17 is a flowchart of an item-display control routine which is executed in the system control section shown Fig. 15;
Figure 18A is a part of a flowchart of a first item-display routine which is executed as a subroutine in the item-display control routine of Fig. 17;
Figure 18B is the remaining part of the flowchart of the first item-display routine;
Figure 19 is an explanatory view showing an example of a large-item menu displayed on a main liquid crystal display (LCD) panel of the mobile phone terminal in an upright mode, to explain the first item-display routine of Figs. 18A and 18B;
Figure 20 is an explanatory view showing an example of the large-item menu displayed on the main LCD panel of the mobile phone terminal in a wide mode, to explain the first item-display routine of Figs. 18A and 18B;
Figure 21 is an explanatory view showing an example of a middle-item menu displayed on the main LCD panel of the mobile phone terminal in the upright mode, to explain the first item-display routine of Figs. 18A and 18B;
Figure 22 is an explanatory view showing an example of the middle-item menu displayed on the main LCD panel of the mobile phone terminal in the wide mode, to explain the first item-display routine of Figs. 18A and 18B;
Figure 23 is an explanatory view showing an example of a small-item menu displayed on the main LCD panel of the mobile phone terminal in the upright mode, to explain the first item-display routine of Figs. 18A and 18B;
Figure 24 is an explanatory view showing the example of the small-item menu displayed on the main LCD panel of the mobile phone terminal in the wide mode, to explain the first item-display routine of Figs. 18A and 18B;
Figure 25 is a flowchart of a first cursor-shifting routine which is executed as a subroutine in the first item-display routine of Figs. 18A and 18B;
Figure 26 is a flowchart of a second cursor-shifting routine which is executed as a subroutine in the first item-display routine of Figs. 18A and 18B;
Figure 27A is a part of a flowchart of a second item-display routine which is executed as a subroutine in the item-display control routine of Fig. 17;
Figure 27B is the remaining part of the flowchart of the second item-display routine;
Figure 28 is an explanatory view showing an example of large items displayed on the main LCD panel of the mobile phone terminal in a column manner, to explain the second item-display routine of Figs. 27A and 27B;
Figure 29 is an explanatory view showing an example of middle items displayed on the main LCD panel of the mobile phone terminal in the column manner, to explain the second item-display routine of Figs. 27A and 27B;
Figure 30 is a flowchart of a first cursor-shifting routine which is executed as a subroutine in the second item-display routine of Figs. 27A and 27B; and
Figure 31 is a flowchart of a second cursor-shifting routine which is executed as a subroutine in the second item-display routine of Figs. 27A and 27B.

### DESCRIPTION OF THE PREFERRED EMBODIMENTS

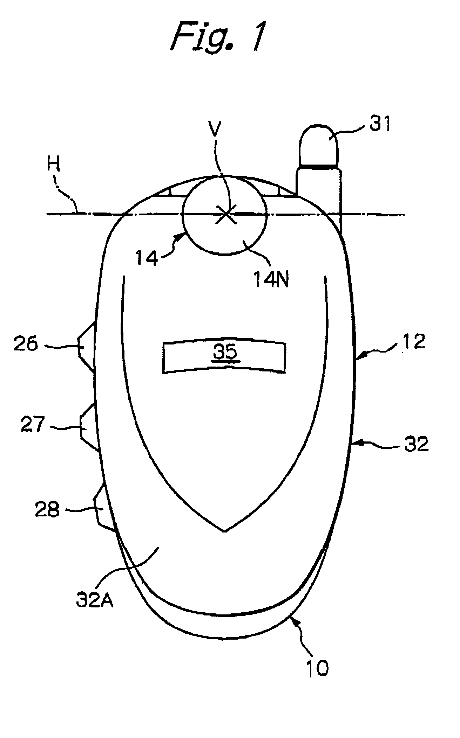

With reference to Figs. 1 to 31, an embodiment of a folding-type mobile phone terminal according to the present invention will be now explained below.

This folding-type mobile phone terminal has not only a speaking function but also a data communication function for use in electronic mail communication, internet communication, etc.

As shown in Fig. 1, the folding-type mobile phone terminal includes a lower unit 10, and an upper unit 12, and the lower and upper units 10 and 12 are hinged to each other by a universal hinge unit or two-shaft type hinge unit 14 so that the upper unit 12 is rotatable around both a horizontal axis H and a vertical axis V with respect to the lower unit 10. Note, in Fig. 1, the vertical axis Y is represented by a cross X, and is perpendicular to the horizontal axis H.

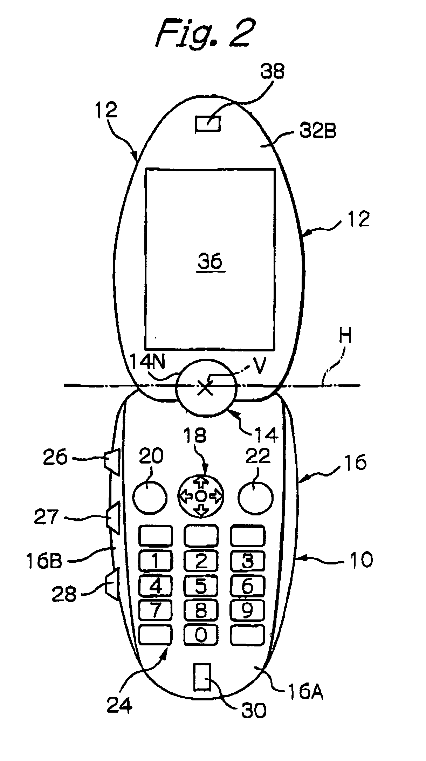

In Fig. 1, the upper unit 12 is shown at a first closed position at which the upper unit 12 is superimposed on the lower unit 10, and can be rotationally moved around each of the horizontal vertical axes H and V with respect to the lower unit 10 by the two-shaft type hinge unit 14. Thus, the upper unit 12 can optionally moved from the first closed position (Fig. 1) to one of respective positions as shown in Figs. 2, 3 and 4, which are referred to as a first opened position, a second closed position, and a second opened position.

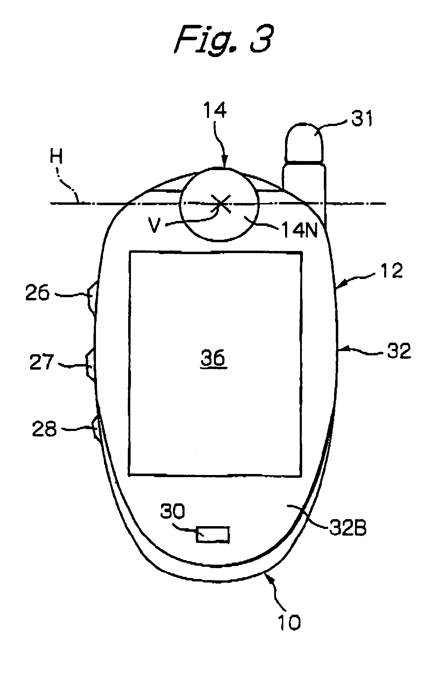

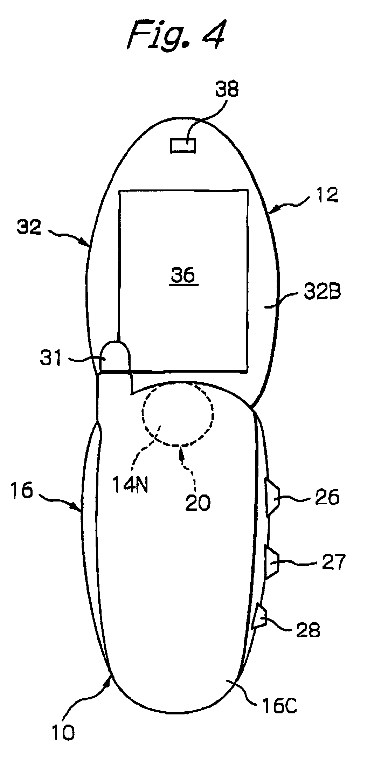

In particular, for example, by rotating the upper unit 12 from the first closed position (Fig. 1) around the horizontal axis H over an angle of 180 degrees, the upper unit 12 can occupy the first opened position as shown in Fig. 2. Also, by rotating the upper unit 12 around the vertical axis V from the first opened position (Fig. 2) to the second closed position (Fig. 3) in either a clockwise direction or a counterclockwise direction over an angle of 180 degrees, the upper 12 can occupy the second closed position as shown in Fig. 3. Further, by rotating the upper unit 12 around the vertical axis V from the first closed position (Fig. 1) in either a clockwise direction or a counterclockwise direction over the angle of 180 degrees, the upper unit 12 can occupy the second opened position as shown in Fig. 4.

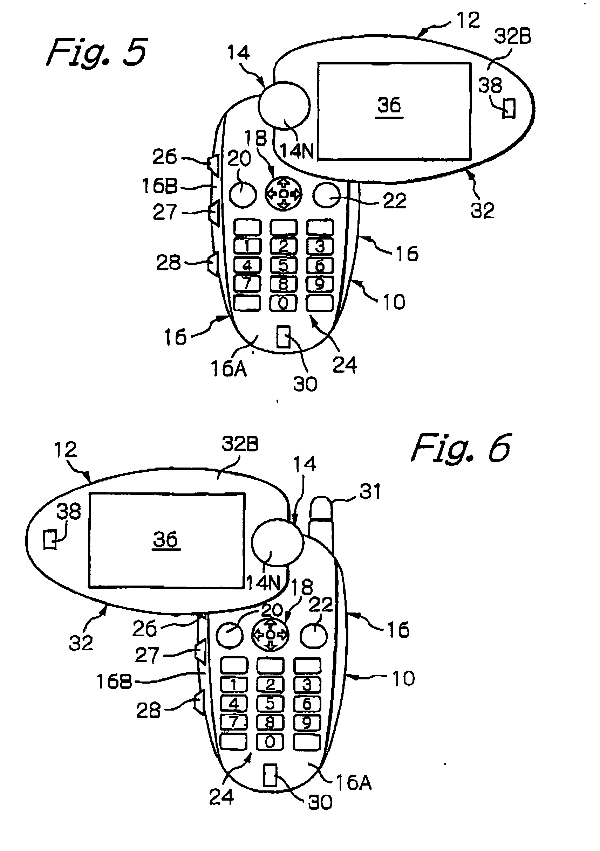

In addition, the upper unit 12 can optionally occupy each of a first right-angle position and a second right-angle position as shown in Figs. 5 and 6, respectively. For example, it is possible to carry out the occupation of the upper unit 12 at the first angular position (Fig. 5) by rotating the upper unit 12 around the vertical axis V from the second closed position (Fig. 3) to the first angular position (Fig. 5) in the counterclockwise direction over an angle of 90 degrees, and it is possible to carry out the occupation of the upper unit 12 at the second angular position (Fig. 6) by rotating the upper unit 12 around the vertical axis V from the second closed position (Fig. 3) to the first angular position (Fig. 5) in the clockwise direction over an angle of 90 degrees.

The lower unit 10 includes a lower casing 16 having a front wall face 16A, and a peripheral side wall face 16B extending from the front wall face 16A, as shown in Figs. 2, 5 and 6. The lower casing 16 also has a bottom wall face 16C from the peripheral side wall face 16B, as shown in Fig. 4.

The front wall face 16A of the lower casing 16 is used as a manipulation board having various keys provided thereon. In particular, in Figs. 2, 5 and 6, reference 18 indicates a swingable shift/determination key; respective references 20 and 22 indicate a return key and an initialization key arranged at both sides of the shift/determination key 18; and references 24 generally indicates fifteen keys arranged in a matrix manner.

The shift/determination key 18 is associated with five switches (not visible) provided in the lower casing 16. One of the five switches is referred to as a determination switch, and the respective remaining four switch are referred to as an up-shift switch, a down-shift switch, a right-shift switch, and a left-shift switch. The four shift-switches are arranged around the determination switch.

When a center area of the shift/determination key 18 is depressed, the determination switch is operated and turned ON to thereby produce an ON-signal. When an up-side area of the shift/determination key 18 is depressed, the up-shift switch is operated and turned ON to thereby produce an ON-signal. When a down-side area of the shift/determination key 18 is depressed, the down-shift switch is operated and turned ON to thereby produce an ON-signal. When a right-side area of the shift/determination key 18 is depressed, the right-shift switch is operated and turned ON to thereby produce an ON-signal. When a left-side area of the shift/determination key 18 is depressed, the left-shift switch is operated and turned ON to thereby produce an ON-signal.

The return key 20 is associated with a return switch (not visible) provided in the lower casing 16, and the return switch is operated and turned ON when depressing the return key 20, to thereby produce an ON signal. Also, the initialization key 22 is associated with an initialization switch (not visible) provided in the lower casing 16, and the initialization switch is operated and turned ON when depressing the initialization key 22, to thereby produce an ON signal.

Each of the fifteen keys 24 is associated with a switch (not visible) provided in the lower casing 16, and it is operated and turned ON when depressing a corresponding key, to thereby produce an ON signal. Note, the fifteen keys 24 are naturally significant for the mobile phone terminal, but the these keys do not directly participate in the present invention.

The side wall face 16C of the lower casing 16 is provided with a manipulation system including three side keys 26, 27 and 28. The side key 26 is referred to as a determination key, and the respective side keys 27 and 28 are referred to as an up-shift key and a down-shift key.

The determination key 26 is associated with a determination switch (not visible) provided in the lower casing 16, and the determination switch is operated and turned 0N when depressing the determination key 26, to thereby produce an ON signal. The determination switch operated by the determination key 26 has the same function as the aforesaid determination switch which is operated by depressing the center area of the shift/determination key 18.

The up-shift key 27 is associated with an up-shift switch (not visible) provided in the lower casing 16, and the up-shift switch is operated and turned ON when depressing the up-shift key 27, to thereby produce an ON signal. The up-shift switch operated by the up-shift key 27 has the same function as the aforesaid up-shift switch which is operated by depressing the up-side area of the shift/determination key 18.

The down-shift key 28 is associated with a down-shift switch (not visible) provided in the lower casing 16, and the down-shift switch is operated and turned ON when depressing the down-shift key 28, to thereby produce an ON signal. The down-shift switch operated by the down-shift key 28 has the same function as the aforesaid down-shift switch which is operated by depressing the down-side area of the shift/determination key 18.

In this embodiment, although the manipulation system includes the individual keys 26, 27 and 28 for operating the determination, up-shift and down-shift switches, it may be formed as a swingable shift/deterntination key which is associated with the determination, up-shift and down-shift switches so as to selectively operate these switches.

Note, in Figs. 2, 5 and 6, reference 30 indicates a microphone provided in the front wall face 16A of the lower casing 16. Also, note, in Figs. 1, 3, 4, and 6, reference 31 indicates an extendable antenna provided in the bottom wall face 16C of the lower casing 16.

The upper unit 12 includes an upper casing 32 having an outer wall face 32A as shown in Fig. 1, and an inner wall face 32B, as shown in Figs. 2 to 6. The upper casing 32 has an auxiliary liquid crystal display (LCD) panel 34 provided on the outer wall face 32A thereof, as shown in Fig. 1. Also, the upper casing 32 has a main LCD panel 36 provided on the inner wall face 32B thereof, as shown in Figs. 2 to 6. Note, in Figs. 2 to 6, reference 38 indicates a speaker provided in the inner wall face 32B of the upper casing 32.

As is apparent from Figs. 2, when the upper unit 12 is at the first opened position, the main LCD panel 36 on the inner wall face 32B of the upper casing 32 is directed to a user, and the front wall face or manipulation board 16A of the lower casing 16 is exposed and accessible to the user so that the various keys 18, 20, 22 and 24 can be manipulated by the user.

Similarly, as shown in Figs. 5 and 6, when the upper unit 12 is at one of the first and second right-angle positions, the main LCD panel 36 is directed to the user, and the manipulation board 16A of the lower casing 16 is exposed and accessible to the user so that the various keys 18, 20, 22 and 24 can be manipulated by the user. Namely, when the upper unit 12 is at any one of the positions as shown in Figs. 2, 5 and 6, the user can manipulate the various keys 18, 20, 22 and 24 on the manipulation board 16A while viewing the main LSD panel 36 of the upper casing 32.

On the other hand, the three side keys 26, 27 and 28, provided on the peripheral side wall face 16B of the lower casing 16, can be manipulated regardless of the positions of the upper unit 12 with respect to the lower unit 10.

When the upper unit 12 is at one the first and second closed positions as shown in Figs. 1 and 3, it is impossible to manipulate the various switches 18, 20, 22 and 24, because the manipulation board 16A of the lower casing 16 is completely covered with the upper casing 32 of the upper unit 12. Especially, at the second closed position (Fig. 3), although the main LCD panel 36 is directed to the user, the various switches 18, 20, 22 and 24 on the manipulation board 16A are inaccessible. In this case, by using the side keys 26, 27 and 28, it is possible to control a display on the main LCD panel 36, as stated in detail hereinafter.

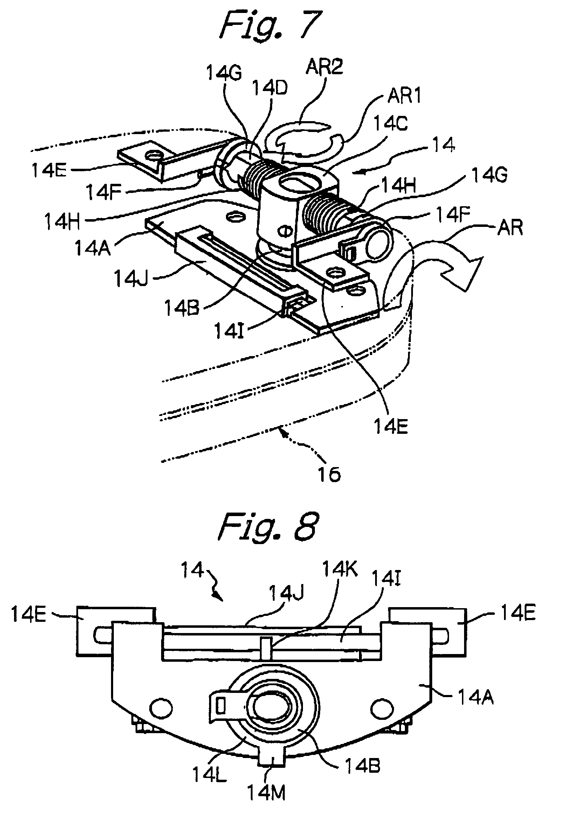

With reference to Fig. 7, a mechanical structure of the two-shaft type hinge unit 14 is shown in a perspective view. Also, in Fig. 8, the two-shaft type hinge unit 14 is shown in a bottom view.

Of course, the two-shaft type hinge unit 14 is constructed such that the aforesaid rotational movements of the upper unit 12 around the horizontal and vertical axes H and V with respect to the lower unit 10 can be carried out, as stated with reference to Figs. 1 to 6.

In particular, as shown in Fig. 7, the two-shaft type hinge unit 14 includes a base plate 14A securely attached to the lower casing 16 at an interior thereof by suitable fasteners (not shown) such as screws, a vertical shaft member 14B rotatably supported by the base plate 14A and extending through the front wall face of the lower casing 16, a sleeve member 14C securely fixed to an upper end of the vertical shaft member 14B, and a horizontal shaft member 14D rotatablely extending through the sleeve member 14C.

The aforesaid vertical axis V is defined as a common longitudinal central axis of both the vertical shaft member 14B and the sleeve member 14C, and the aforesaid horizontal axis H is defined as a central longitudinal axis of the horizontal shaft member 14D.

The horizontal shaft member 14D has a pair of bracket members 14E securely attached to the ends thereof by retainer rings 14F, and each of the bracket members 14E is inserted in and securely attached to the upper casing 32 by suitable fasteners (not shown) such as screws. Thus, the upper unit 12 is rotatable around both the horizontal and vertical axes H and V with respect to the lower unit 10.

Also, the horizontal shaft member 14D is provided with a pair of annular click rings 14G loosely mounted onto the end portions thereof, and a pair of compression coil springs 14H associated therewith such that the respective annular click rings 14G are elastically biased against the bracket members 14E. Thus, when the upper unit 12 is positioned at an optional position with respect to the lower unit 10, it is possible to elastically hold the upper unit 12 at that optional position. Note, in Fig. 7, a part of each of the compression springs 14H is omitted for the purpose of illustration of the horizontal shaft member 14D.

In Fig. 7, an open arrow AR represents a rotational angular range of 180 degrees over which the upper unit 12 can be rotated, for example, from the first closed position (Fig. 1) to the first opened position (2). The rotational angular range is defined by abutment of the upper casing 32 against the lower casing 16. Namely, when the upper unit 12 is rotated from the first closed position (Fig. 1) to the first opened position (2), a part of the upper casing 32 is abutted against the lower casing 16 to thereby prevent a further rotational movement of the upper unit 12.

Also, in Fig. 7, an open arrow AR1 represents a first rotational angular range of 180 degrees over which the upper unit 12 can be rotated, for example, from the first opened position (2) to the second closed position (Fig. 3) in the clockwise direction, and an open arrow AR2 represents a second rotational angular range of 180 degrees over which the upper unit 12 can be rotated, for example, from the first opened position (2) to the second closed position (Fig. 3) in the counterclockwise direction.

In order to define each of the first and second rotational angular ranges (AR1 and AR2), the base plate 14A is formed with a rail 14I, and a movable stopper 14J is slidably mounted on a rail 14I. As shown in Fig. 8, the movable stopper 14J has an abutment 14K suspended therefrom. On the other hand, the vertical shaft member 14B has a ring member 14L secured attached to a lower end thereof, and the ring member 14L has a protrusion 14M radially and outwardly projected therefrom, as shown in Fig. 8. The movable stopper 14H can moved along the rail 14I by only a distance corresponding to a width of the protrusion 14L.

For example, when the upper unit 12 is rotated from the first opened position (Fig. 2) to the second closed position (Fig. 3) in the clockwise direction, the protrusion 14 is engaged with the abutment 14K to thereby move the movable stopper 14J along the rail 14I toward one of the ends of the rail 14I. When the movable stopper 14J is moved by the distance corresponding the width of the protrusion 14L, it is abutted against the base member 14A at the corresponding end of the rail 14I to thereby stop the movement of the movable stopper 14J. The same is substantially true for the counterclockwise rotational movement of the upper unit 12 from the first opened position (Fig. 2) to the second closed position (Fig. 3) over the angle of 180 degrees.

In short, by the movable stopper 14J, it is possible to ensure both the rotational movement of the movable stopper 14J from the first opened position (Fig. 2) to the second closed position (Fig. 3) in the clockwise direction over the angle of 180 degrees and the rotational movement of the movable stopper 14J from the first opened position (Fig. 2) to the second closed position (Fig. 3) in the counterclockwise direction over the angle of 180 degrees.

Note, in Figs. 1 to 6, reference 14N indicates a decorative cap member for covering a top end of the sleeve member 14C.

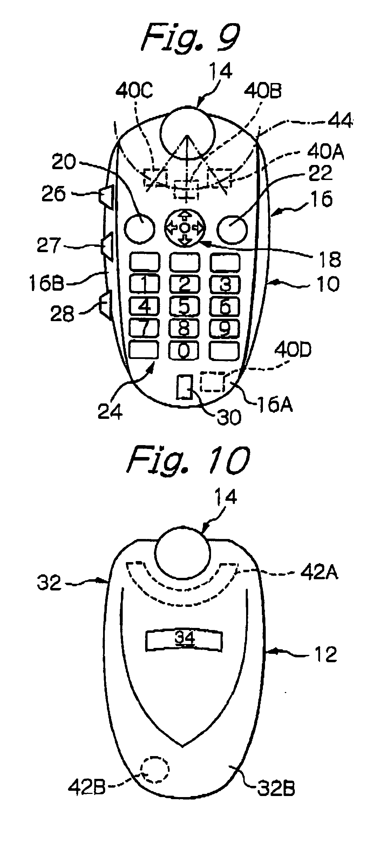

In order to detect a relative position of the upper unit 12 with respect to the lower unit 10, the lower unit 10 has four magnetic sensors 40A, 40B, 40C and 40D provided in the interior of the lower casing 16, as shown in Fig. 9, and the upper unit 12 has a sector-shaped permanent magnet 42A and a circular permanent magnet 42B provided in the interior of the upper casing 32, as shown in Fig. 10. Note, each of the magnetic sensors 40A, 40B, 40C and 40D may be formed as a device including a Hall element.

As shown in Fig. 9, the magnetic sensors 40A, 40B and 40C are arranged along a geometric arc 44 at regular angular intervals such that centers of the magnetic sensors 40A, 40B and 40C are located on the geometric arc 44. In particular, the geometric arc 44 has a geometric center located at the vertical axis V (Figs. 1 to 3), and the magnetic sensors 40A and 40C are arranged so as to define an angle of 45 degrees between a geometric line passing through the center of the magnetic sensor 40C and the center of the geometric arc 44 and a geometric line passing through the center of the magnetic sensor 40A and the center of the geometric arc 44. Also, the magnetic sensor 40B is arranged at a location which the geometric arc 44 intersects with a geometric line passing through the center of the magnetic sensor 40A and the center of the geometric arc 44 and coinciding with a longitudinal central axis (not shown) of the lower casing 16. The magnetic sensor 40D is arranged at an end side of the lower casing 16 opposed to the two-shaft type hinge unit 14, as shown in Fig. 9.

As shown in Fig. 10, the sector-shaped permanent magnet 42A is arranged along a geometric arc (not shown) which is equivalent to the geometric arc 44 shown in Fig. 9. When the upper unit 12 is superimposed on the lower unit 10 at the first closed position (Fig. 1), the sector-shaped permanent 42A is equally divided into two parts with a longitudinal central axis (not shown) of the folded mobile phone terminal. Also, as shown in Fig. 10, the circular permanent magnet 42B is arranged at an end side of the upper casing 32 opposed to the two-shaft type hinge unit 14. When the upper unit 12 is superimposed on the lower unit 10 at the first closed position (Fig. 1), the magnetic sensor 40D and the circular permanent magnet 42B are arranged at locations which are symmetrical with respect to the longitudinal central of the folded mobile phone terminal.

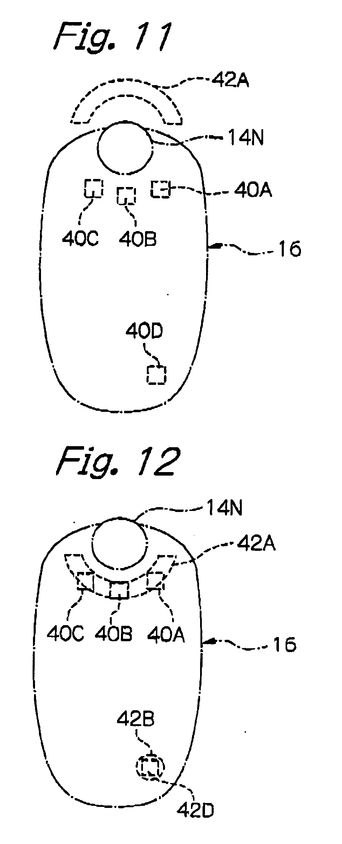

When the upper unit 12 is at either the first opened position (Fig. 2) or the second opened position (Fig. 4), the sector-shaped permanent magnet 42A is positioned at a position as shown in Fig. 11. Namely, at the position shown in Fig. 11, the sector-shaped permanent magnet 42A is remotely separated from the magnetic sensors 40A, 40B and 40C, and thus a magnet field generated from the sector-shaped permanent magnet 42A cannot be detected by all the magnetic sensors 40A, 40B and 40C. Similarly, the circular permanent magnet 42B (not shown in Fig. 11) is further remotely separated from the magnetic sensor 40D, and thus a magnet field generated from the circular permanent magnet 42B cannot be naturally detected by the magnetic sensor 40D.

In short, when the magnet fields generated by the permanent magnets 42A and 42B are not detected by all the magnetic sensors 40A, 40B, 40C and 40D, it can be recognized that the upper unit 12 is at either the first opened position (Fig. 2) or the second opened position (Fig. 4) with respect to the lower unit 10.

When the upper unit 12 is at the second closed position as shown in Fig. 3, the sector-shaped permanent magnet 42A is positioned at a position as shown in Fig. 12. Namely, at the position shown in Fig. 12, the sector-shaped permanent magnet 42A completely overlaps with all the magnetic sensors 40A, 40B and 40C, and thus the magnet field generated by the sector-shaped permanent magnet 42A is detected by all the magnetic sensors 40A, 40B and 40C. On the other hand, as shown in Fig. 12, the circular permanent magnet 42B is registered with the magnetic sensor 40D, and thus the magnet filed generated by the circular permanent magnet 42B is detected by the magnetic sensor 40D.

In short, when the magnet field generated by the sector-shaped permanent magnet 42A is detected by all the magnetic sensors 40A, 40B and 40C, and when the magnet field generated by the circular permanent magnet 42B is detected by the magnetic sensor 40D, it can be recognized that the upper unit 12 is at the second closed position (Fig. 3) with respect to the lower unit 10.

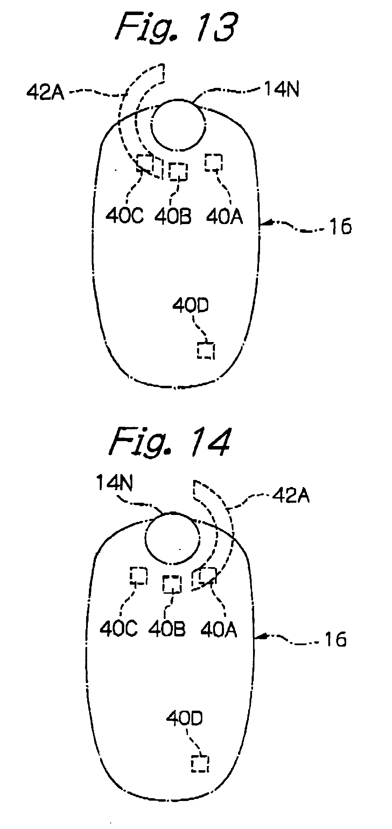

When the upper unit 12 is at the first right-angle position as shown in Fig. 5, the sector-shaped permanent magnet 42A is positioned at a position as shown in Fig. 13. Namely, at the position shown in Fig. 13, the sector-shaped permanent magnet 42A overlaps with only the magnetic sensor 40C, and thus the magnet field generated by the sector-shaped permanent magnet 42A is detected by only the magnetic sensor 40C. On the other hand, the circular permanent magnet 42B (not shown in Fig. 13) is remotely separated from the magnetic sensor 40D, and thus the magnet filed generated by the circular permanent magnet 42B cannot be detected by the magnetic sensor 40D.

In short, when the magnet field generated by the sector-shaped permanent magnet 42A is detected by only the magnetic sensor 40C, and when the magnet field generated by the circular permanent magnet 42B is not detected by the magnetic sensor 40D, it can be recognized that the upper unit 12 is at the first right-angle position (Fig. 5) with respect to the lower unit 10.

When the upper unit 12 is at the second right-angle position as shown in Fig. 6, the sector-shaped permanent magnet 42A is positioned at a position as shown in Fig. 14. Namely, at the position shown in Fig. 14, the sector-shaped permanent magnet 42A overlaps with only the magnetic sensor 40A, and thus the magnet field generated by the sector-shaped permanent magnet 42A is detected by only the magnetic sensor 40A. On the other hand, the circular permanent magnet 42B (not shown in Fig. 14) is remotely separated from the magnetic sensor 40D, and thus the magnet filed generated by the circular permanent magnet 42B cannot be detected by the magnetic sensor 40D.

In short, when the magnet field generated by the sector-shaped permanent magnet 42A is detected by only the magnetic sensor 40A, and when the magnet field generated by the circular permanent magnet 42B is not detected by the magnetic sensor 40D, it can be recognized that the upper unit 12 is at the second right-angle position (Fig. 6) with respect to the lower unit 10.

Note, in Figs. 11 to 14, only a contour of the lower casing 16 of the lower unit 10 is illustrated to thereby clarify a relative positional relationship between the magnetic sensors 40A, 40B, 40C and 40D and the permanent magnets 42A and 42B.

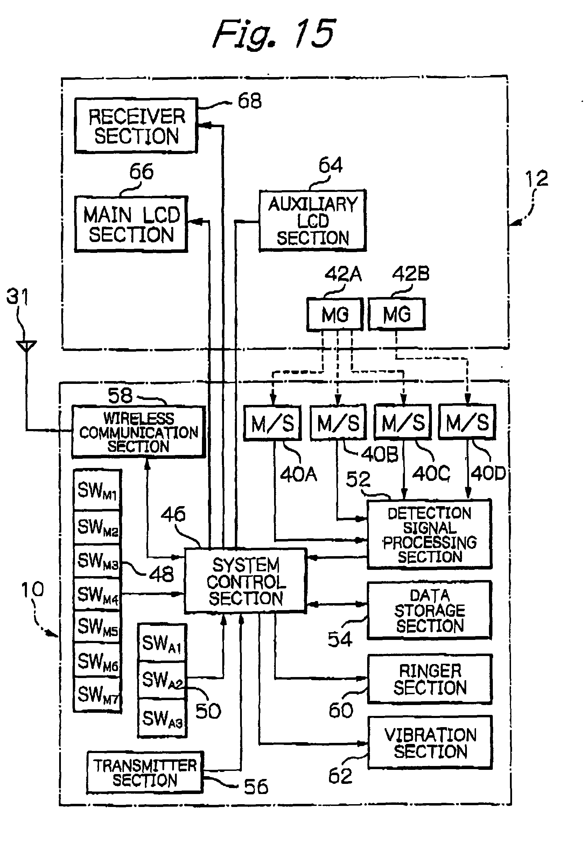

Figure 15 shows a block diagram of the first embodiment of the folding-type mobile phone terminal as explained with reference Figs. 1 to 14.

In Fig. 15, reference 46 indicates a system control section is constructed as a microcomputer including a central processing unit (CPU), a read-only memory (ROM) for storing various programs and constants, a random-access memory (RAM) for storing temporary data, an input/output (I/O) interface circuit.

Reference 48 indicates a main input section including a plurality of switches, and only seven switches SW_{M1}, SW_{M2}, SW_{M3'} SW_{M4}, SW_{M5}, SW_{M6} and SW_{M7} are representatively shown in the main input section 48.

The five switches SW_{M1}, SW_{M2}, SW_{M3}, SW_{M4} and SW_{M5} are associated with the shift/determination key 18. Namely, the switch SW_{M1} is used as the determination switch which is operated and turned ON by depressing the center area of the shift/determination key 18; the switch SW_{M2} is used as the up-shift switch which is operated and turned 0N by depressing the up-side area of the shift/determination key 18; the switch SW_{M3} is used as the down-shift switch which is operated and turned ON by depressing the down-side area of the shift/determination key 18; the switch SW_{M4} is used as the right-shift key which is operated and turned ON by depressing the right-side area of the shift/determination key 18, and the switch SW_{M5} is used as the left-shift switch which is operated and turned ON by the left-side area of the shift/determination key 18. In short, whenever each of the switches SW_{M1}, SW_{M2}, SW_{M3}, SW_{M4} and SW_{M5} is operated, an ON-signal is output from a corresponding switch to the system control section 46.

The switch SW_{M6} is used as the return switch which is operated and turned ON by depressing the return key 20, and the switch SW_{M7} is used as the initialization switch which is operated and turned ON by depressing the initialization key 22. Whenever each of the switches SW_{M6} and SW_{M7} is operated, an ON-signal is output from a corresponding switch to the system control section 46.

Reference 50 indicates an auxiliary input section including three switches SW_{A1}, SW_{A2} and SW_{A3}. These switches SW_{A1}, SW_{A2} and SW_{A3} are associated with the respective side keys 26 and 27 and 28. Namely, the switch SW_{A1} is used as the determination switch which is operated and turned ON by depressing the determination key 26; the switch SW_{A2} is used as the up-shift switch which is operated and turned ON by depressing the up-shift key 27; and the switch SW_{A3} is used as the down-shift switch which is operated and turned ON by depressing the down-shift key 28. In short, whenever each of the switches SW_{A1}, SW_{A2} and SW_{A3} is operated, an ON-signal is output from a corresponding switch to the system control section 46.

Reference 52 indicates a detection signal processing section for processing detection signals output from the aforesaid magnetic sensors (M/S) 40A, 40B, 40C and 40D. In particular, when each of the magnetic sensors 40A, 40B, 40C detects the magnetic field generated by the sector-shaped permanent magnet 42A, the detection signal processing section 52 outputs the detection signal as a high level signal to the system control section 46. Also, when each of the magnetic sensors 40A, 40B, 40C does not detect the magnetic field generated by the sector-shaped permanent magnet 42A, the detection signal processing section 52 outputs the detection signal as a low level signal to the system control section 46. Similarly, when the magnetic sensor 40D detects the magnetic field generated by the circular permanent magnet 42B, the detection signal processing section 52 outputs the detection signal as a high level signal to the system control section 46. Also, when the magnetic sensor 40D does not detect the magnetic field generated by the circular permanent magnet 42B, the detection signal processing section 52 outputs the detection signal as a low level signal to the system control section 46.

Reference 54 indicates a data storage section which is constituted as a nonvolatile memory device. As stated hereinafter, various data are stored in the data storage section 54, and a part of the data is rewritten, if necessary.

Reference 56 indicates a transmitter section including the aforesaid microphone 30. When voice is input to the transmitter section 56 through the microphone 30, the voice is converted into a voice signal, and then the voice signal is output from the transmitter section 56 to the system control section 46.

Reference 58 indicates a wireless communication section which is connected to the aforesaid extendable antenna 31. When a voice signal or data is input from the system control section 46 to the wireless communication section 58, the voice signal or data is processed in the wireless communication section 58, and then it is transmitted as an electromagnetic wave from the antenna 31.

Reference 60 indicates a ringer section which is operated under control of the system control section 46. When a voice signal or data, which is transmitted as an electromagnetic wave from a base station, is received by the wireless communication section 58 through the antenna 31, the voice signal or data is processed in the wireless communication section, and is then input to the system control section 46. At this time, the ringer section 60 is operated by the system control section 46 to thereby produce a ringing sound.

Reference 62 indicates a vibrator section, which is substituted for the ringer section 60 when a manner mode is set (i.e., when the operation of the ringer section 60 is stopped). Namely, when a voice signal or data, which is transmitted as an electromagnetic wave from a base station, is received by the wireless communication section 58 through the antenna 31, the voice signal or data is processed in the wireless communication section, and is then input to the system control section 46. At this time, the vibration, section 62 is operated by the system control section 46 as a substitute for the ringer section 60, to thereby produce a vibration.

Note, the above-mentioned various elements 46, 48, 50, 52, 54, 56, 58, 60 and 62 are provided in the lower casing 16 of the lower unit 10, as shown in Fig. 15.

In Fig. 15, reference 64 indicates an auxiliary LCD section including the aforesaid auxiliary LCD panel 34. The auxiliary LCD section is operated under control of the system control section 46 such that a message is displayed on the auxiliary LCD panel 34.

Reference 66 indicates a main LCD section including the aforesaid main LCD panel 36. The main LCD section is operated under control of the system control section 46 such that an image and a message are displayed on the main LCD panel 36 in accordance with present invention, as stated in detail hereinafter.

Reference 68 indicates a receiver section including the aforesaid speaker 38. When a voice signal, which is transmitted as an electromagnetic wave from a base station, is received by the wireless communication section 58 through the antenna 31, the voice signal is processed in the wireless communication section, and is then input to the system control section 46. After the voice signal is further processed in the system control section 46, it is output to the receiver section 68 in which voice is reproduced by the speaker 38 on the basis of the processed voice signal.

Note, the above-mentioned elements 74, 66 and 68 are provided in the upper casing 32 of the upper unit 12, as shown in Fig. 15.

As already stated above, the sector-shaped permanent magnet 42A and the circular permanent magnet 42B are provided in the upper casing 32 of the upper unit 12, and are associated with the magnetic sensors 40A, 40B, 40C and 40D to thereby detect a relative position of the upper unit 12 with respect to the lower unit 10. In Fig. 15, a relative positional relationship between the magnetic sensors 40A, 40B and 40C and the sector-shaped permanent magnet 42A is conceptually represented by three arrow-headed broken lines, and a relative positional relationship between the magnetic sensor 40D and the circular permanent magnet 42B is conceptually represented by an arrow-headed broken line.

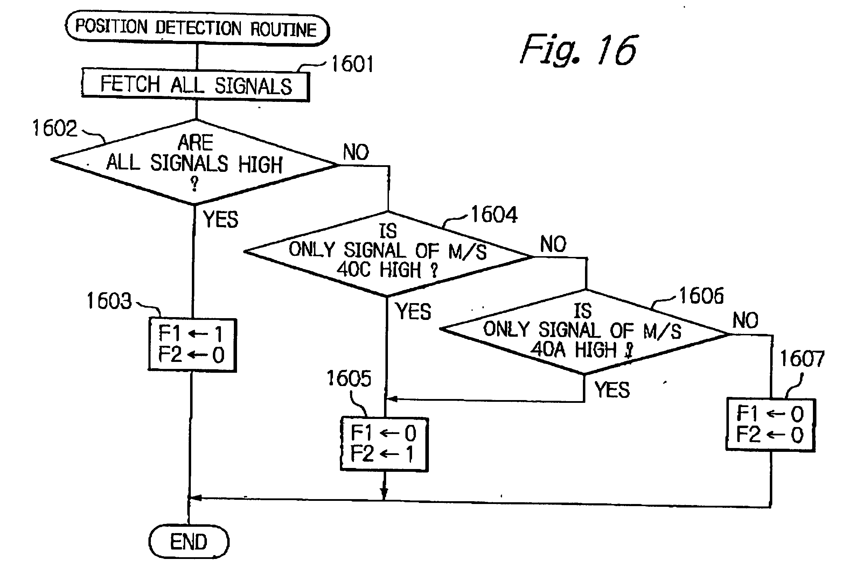

Figure 16 shows a flowchart of a position detection routine which is formed as a time-interruption routine executed in the CPU of the system control section 46 at regular suitable intervals of, for example, 20ms. Note, the execution of the position detection routine is started when the folding-type mobile phone terminal is powered 0N, and is repeated every 20ms as long as the folding-type mobile phone terminal is powered 0N.

At step 1601, all the detection signals, which are derived from the magnetic sensors (M/S) 40A, 40B, 40C and 40D, are fetched from the detection signal processing section 52.

Then, at step 1602, it is determined whether all the detection signals are high. When all the detection signals are high, i.e. when the upper unit 12 is at the second closed position so that the manipulation board 16A of the lower casing 16 is completely superimposed on and covered with the upper unit 23, the control proceeds to step 1603, in which respective flags F1 and F2 are made to be "1" and "0" .

At step 1602, if at least one of the detection signals is high, the control proceeds from step 1602 to step 1604, in which it is determined whether only the detection signal derived from the magnetic sensor 40C is high. When only the detection signal derived from the magnetic sensor 40C is high, i.e. when the upper unit 12 is at the first right-angle position as shown in Fig. 5, the control proceeds to step 1605, in which the respective flags F1 and F2 are made to be "0" and "1" .

At step 1604, if the detection signal derived from the magnetic sensor 40C is low, the control proceeds from step 1604 to step 1606, in which it is determined whether only the detection signal derived from the magnetic sensor 40A is high. When only the detection signal derived from the magnetic sensor 40C is high, i.e. when the upper unit 12 is at the second right-angle position as shown in Fig. 6, the control proceeds to step 1606, in which the flags F1 and F2 are made to be "0" .

In short, during the execution of the position detection routine of Fig. 16 at the regular intervals of 20ms, a relative position of the upper unit 12 with respect to the lower unit 10 is monitored. When the manipulation board 16A of the lower casing 16 is accessible to a user, the flag F1 is made to be "0" , and the flag F1 is made to be "1" when the manipulation board 16A of the lower casing 16 is inaccessible to the user. Also, when the upper unit 12 is only at either the first right-angle position (Fig. 5) or the second right-angle position, the flag F2 is made to be "1".

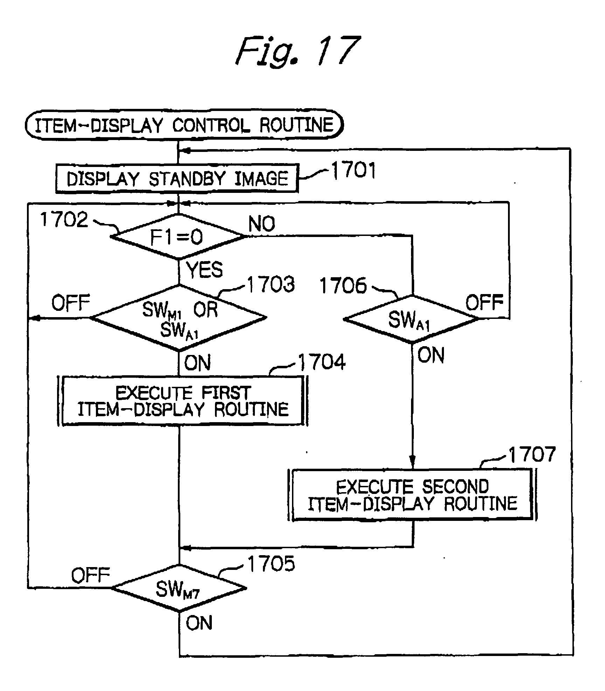

Figure 17 shows a flowchart of an item-display control routine executed in the CPU of the system control section 46. Note, the execution of the item-display control routine is started when the folding-type mobile phone terminal is powered ON.

At step 1701, a frame of standby image data is read from the data storage section 54, and a standby image is displayed on the main LCD panel 36 in accordance with the read standby image data.

At step 1702, it is determined whether the flag F1 is "0". If F1 = 0, i.e. if the manipulation board 16A of the lower casing 16 is accessible to a user, the control proceeds to step 1703, in which it is monitored whether either the determination switch SW_{M1} or SW_{A1} is turned ON. When it is confirmed that neither the determination switch SW_{M1} nor SW_{A1} is turned ON, the control returns to step 1702.

At step 1703, when it is confirmed that either the determination switch SW_{M1} or SW_{A1} is turned ON, the control proceeds to step 1704, in which a first item-display routine is executed as stated in detail hereinafter.

When the execution of the first item-display routine is completed, the control proceeds from step 1704 to step 1705, in which it is monitored whether the initialization switch SW_{M7} is turned ON by depressing the initialization key 22. When the initialization switch SW_{M7} is in an OFF-state, the control returns from step 1705 to step 1702. On the other hand, when it is confirmed that the initialization switch SW_{M7} is turned 0N, the control returns to step 1701.

At step 1702, when the flag F1 is "1" , the control proceeds from step 1702 to step 1706, in which it is monitored whether the determination switch SW_{A1} is turned 0N by depressing the side key 26. When the determination switch SW_{A1} is in an OFF-state, the control returns from step 1706 to step 1702.

At step 1706, when it is confirmed that the determination switch SW_{A1} is turned 0N, the control proceeds to step 1704, in which a second item-display routine is executed as stated in detail hereinafter.

When the execution of the second item-display routine is completed, the control proceeds from step 1707 to step 1705, in which it is monitored whether the initialization switch SW_{M7} is turned ON by depressing the initialization key 22. When the initialization switch SW_{M7} is in an OFF-state, the control returns from step 1707 to step 1702. On the other hand, when it is confirmed that the initialization switch SW_{M7} is turned ON, the control returns to step 1701.

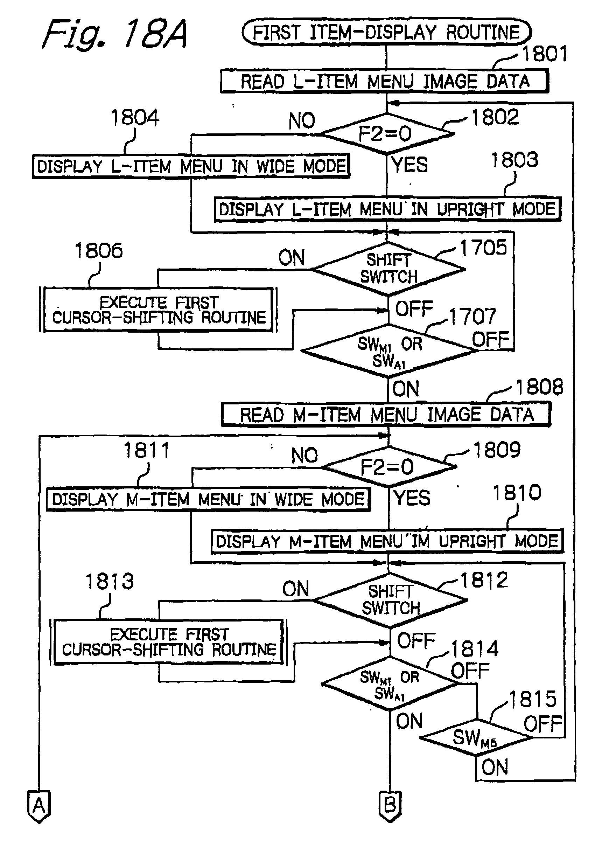

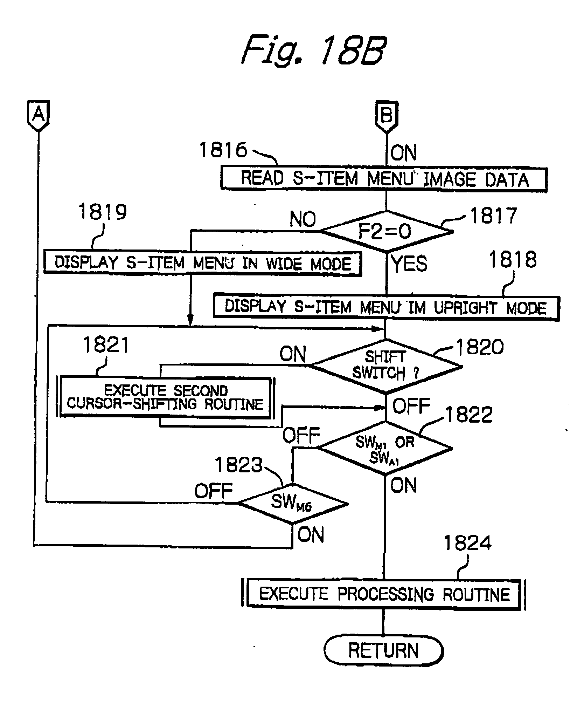

Figures 18A and 18B show a flowchart of the first item-display routine which is executed as a subroutine at step 1704 of the item-display control routine of Fig. 17.

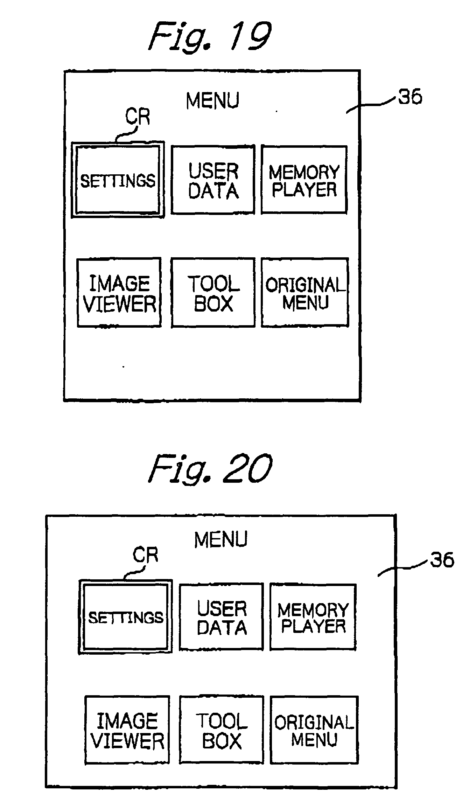

At step 1801, a frame of large-item menu image data is read from the data storage section 54. Then, at step 1802, it is determined whether the flag F2 is "0". If F2 = 0, the control proceeds to step 1803, in which a large-item menu is displayed on the main LCD panel 36 in an upright mode in accordance with the read large-item menu image data, as shown in Fig. 19 by way of example. If F2 = 1, the control proceeds to step 1804, in which a large-item menu is displayed on the main LCD panel 36 in a wide mode in accordance with the read large-item menu image data, as shown in Fig. 20 by way of example.

In the example of the large-item menu shown in Figs. 18 and Fig. 19, the large-item menu includes six large items "SETTINGS" , "USER DATA" , "MELODY PLAYER", "IMAGE VIEWER", "TOOL BOX" and "ORIGINAL MENU" , and these large items are two-dimensionally displayed on the LCD panel 36. Namely, in this embodiment, the large items are arranged on a screen of the LCD panel in a matrix manner. When the large-item menu is initially displayed on the LCD panel 36, the large item "SETTINGS" may be forcibly selected with a cursor CR.

At step 1805, it is monitored whether any one of the shift switches SW_{M2}, SW_{M3}, SW_{M4}, SW_{M5}, SW_{A2} and SW_{A3} is turned ON. When any one of the shift switches SW_{M2}, SW_{M3}, SW_{M4}, SW_{M5}, SW_{A2} and SW_{A3} is turned ON, the control proceeds to step 1806, in which a first cursor-shifting routine is executed. In the execution of the first cursor-shifting routine, it is possible to optionally select one of the six large items "SETTINGS" , "USER DATA" , "MELODY PLAYER" , "IMAGE VIEWER" , "TOOL BOX" and "ORIGINAL MENU" by shifting the cursor CR, as stated in detail hereinafter.

After the execution of the first cursor-shifting routine is completed, the control proceeds from 1806 to step 1807. On the other hand, at step 1805, when all the shift switches SW_{M2}, SW_{M3}, SW_{M4}, SW_{M5}, SW_{A2} and SW_{A3} are in an OFF-state, the control directly proceeds from step 1805 to step 1807.

At step 1807, it is monitored whether either the determination switch SW_{M1} or SW_{A1} is turned ON. When both the determination switches SW_{M1} and SW_{A1} is in an OFF-state, the control returns to step 1805.

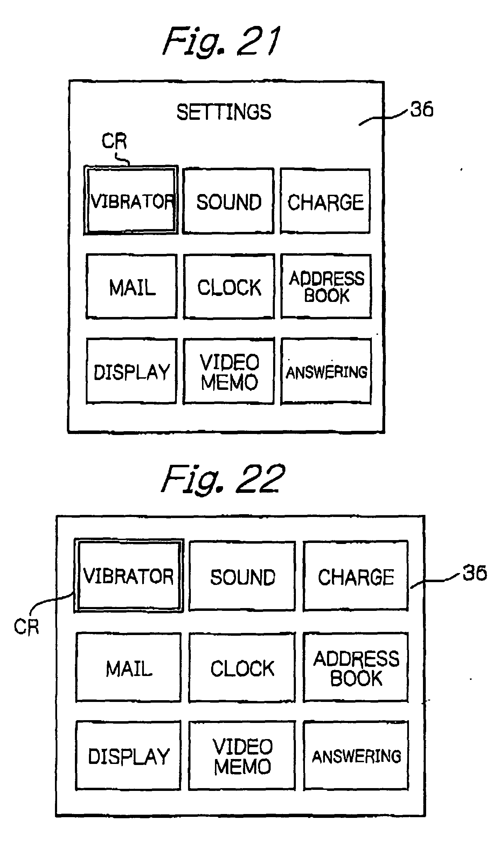

At step 1807, when it is confirmed that either the determination switch SW_{M1} or SW_{A1} is turned ON, the control proceeds to step 1808, in which a frame of middle-item menu image data corresponding to a selected large item is read from the data storage section 54. Then, at step 1809, it is determined whether the flag F2 is "0" . If F2 = 0, the control proceeds to step 1810, in which a middle-item menu is displayed on the main LCD panel 36 in an upright mode in accordance with the read middle-item menu image data, as shown in Fig. 21 by way of example. If F2 = 1, the control proceeds to step 1811, in which a middle-item menu is displayed on the main LCD panel 36 in a wide mode in accordance with the read middle-item menu image data, as shown in Fig. 22 by way of example.

In the example of the middle-item menu shown in Figs. 21 and Fig. 22, the middle-item menu includes nine middle items "VIBRATOR" , "SOUND" , "CHARGE" , "MAIL" , "CLOCK" , "ADDRESS BOOK" , "DISPLAY" , "VOICE MEMO" and "ANSWERING" , and these middle items are two-dimensionally displayed on the LCD panel 36. Namely, in this embodiment, the middle items are arranged on the screen of the LCD panel in a matrix manner. When the middle-item menu is initially displayed, the middle item "VIBRATOR" may be forcibly selected with the cursor CR.

Note, the middle items "VIBRATOR" , "SOUND" , "CHARGE" , "MAIL" , "CLOCK" , "ADDRESS BOOK" , "DISPLAY" , "VOICE MEMO" and "ANSWERING" correspond to the large item "SETTINGS" shown in Figs. 19 and 20. Namely, the nine middle items are included in the large item "SETTINGS" .

At step 1812, it is monitored whether any one of the shift switches SW_{M2}, SW_{M3}, SW_{M1}, SW_{M5},SW_{A2} and SW_{A3} is turned ON. When any one of the shift switches SW_{M2}, SW_{M3}, SW_{M4}, SW_{M6}, SW_{A2} and SW_{A3} is turned ON, the control proceeds to step 1813, in which the aforesaid first cursor-shifting routine is executed. Namely, in the execution of the first cursor-shifting routine, it is possible to optionally select one of the nine middle items "VIBRATOR" , "SOUND" , "CHARGE" , "MAIL" , "CLOCK" , "ADDRESS BOOK" , "DISPLAY" , "VOICE MEMO" and "ANSWERING" by shifting the cursor CR, as stated in detail hereinafter.

After the execution of the first cursor-shifting routine is completed, the control proceeds from 1813 to step 1814. On the other hand, at step 1812, when all the shift switches SW_{M2}, SW_{M3}, SW_{M4}, SW_{M5}, SW_{A2} and SW_{A3} are in an OFF-state, the control directly proceeds from step 1812 to step 1814.

At step 1814, it is monitored whether either the determination switch SW_{M1} or SW_{A1} is turned ON. When both the determination switches SW_{M1} and SW_{A1} are in an OFF-state, the control returns to step 1815, in which it is monitored whether the return switch SW_{M6} is turned ON. When the return switch SW_{M6} is in an OFF-state, the control returns to step 1812.

At step 1815, when it is confirmed that the return switch SW_{M6} is turned ON, the control returns to step 1802, so that the large-item menu is again displayed on the main LCD panel 36.

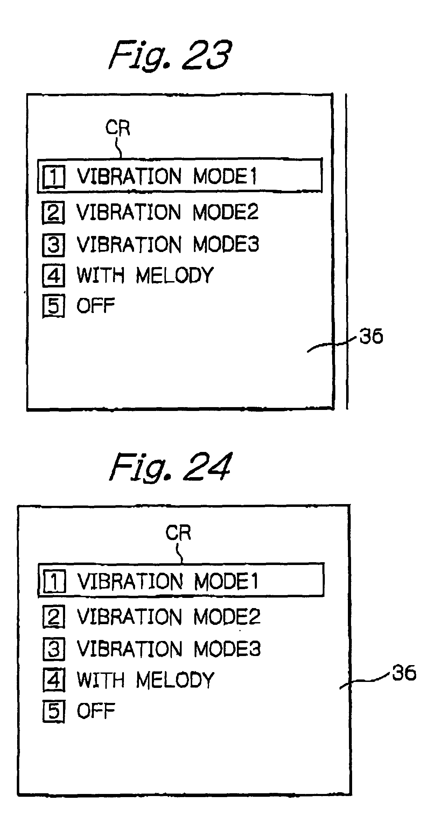

At step 1814, when it is confirmed that either the determination switch SW_{M1} or SW_{A1} is turned ON, the control proceeds to step 1816, in which a frame of small-item menu image data corresponding to a selected middle item is read from the data storage section 54. Then, at step 1817, it is determined whether the flag F2 is "0" . If F2 = 0, the control proceeds to step 1818, in which a small-item menu is displayed on the main LCD panel 36 in an upright mode in accordance with the read small-item menu image data, as shown in Fig. 23 by way of example. If F2 = 1, the control proceeds to step 1819, in which a small-item menu is displayed on the main LCD panel 36 in a wide mode in accordance with the read small-item menu image data, as shown in Fig. 24 by way of example.

In the example of the small-item menu shown in Figs. 23 and Fig. 24, the small-item menu includes five small items "VIBRATION MODE 1" , "VIBRATION MODE 2" , "VIBRATION MODE 3" , "WITH MELODY" and "OFF" , and these small items are one-dimensionally displayed on the LCD panel 36. Namely, in this embodiment, the small items are arranged on the screen of the LCD panel in a column manner. When the small-item menu is initially displayed, the middle item "VIBRATOR MODE 1" may be forcibly selected with the cursor CR.

Note, the small items "VIBRATION MODE 1" , "VIBRATION MODE 2" , "VIBRATION MODE 3" , "WITH MELODY" and "OFF" correspond to the middle item "VIBRATOR"' shown in Figs. 21 and 22. Namely, the five nine small items are included in the middle item "VIBRATOR" .

At step 1820, it is monitored whether any one of the up-shift switches SW_{M2} and SW_{A2} and down-shift switches SW_{M3} and SW_{A3} is turned ON. When any one of the up-shift switches SW_{M2} and SW_{A2} and down-shift switches SW_{M3} and SW_{A3} is turned ON, the control proceeds to step 1821, in which a second cursor-shifting routine is executed. Namely, in the execution of the second cursor-shifting routine, it is possible to optionally select one of the five "VIBRATION MODE 1" , "VIBRATION MODE 2" , "VIBRATION MODE 3" , "WITH MELODY" and "OFF" by shifting the cursor CR, as stated in detail hereinafter.

After the execution of the second cursor-shifting routine is completed, the control proceeds from 1821 to step 1822. On the other hand, at step 1820, when all the up-shift switches SW_{M2} and SW_{A2} and down-shift switches SW_{M3} and SW_{A3} are in an OFF-state, the control directly proceeds from step 1820 to step 1822.

At step 1822, it is monitored whether either the determination switch SW_{M1} or SW_{A1} is turned ON. When both the determination switches SW_{M1} and SW_{A1} are in an OFF-state, the control returns to step 1823, in which it is monitored whether the return switch SW_{M6} is turned ON. When the return switch SW_{M6} is in an OFF-state, the control returns to step 1820.

At step 1823, when it is confirmed that the return switch SW_{M6} is turned ON, the control returns to step 1809, so that the middle-item menu is again displayed on the main LCD panel 36.

At step 1822, when it is confirmed that either the determination switch SW_{M1} or SW_{A1} is turned ON, the control proceeds to step 1824, in which a routine for performing a processing, such as a setting, a selection, an ON processing, an OFF processing or the like, corresponding to a selected small item, is executed. For example, when the small item "VIBRATION MODE 1" is selected, a vibrator included in the vibration section 62 is operated in a vibration mode 1. Also, for example, when the small item "OFF" is selected, the operation of the vibrator is prohibited.

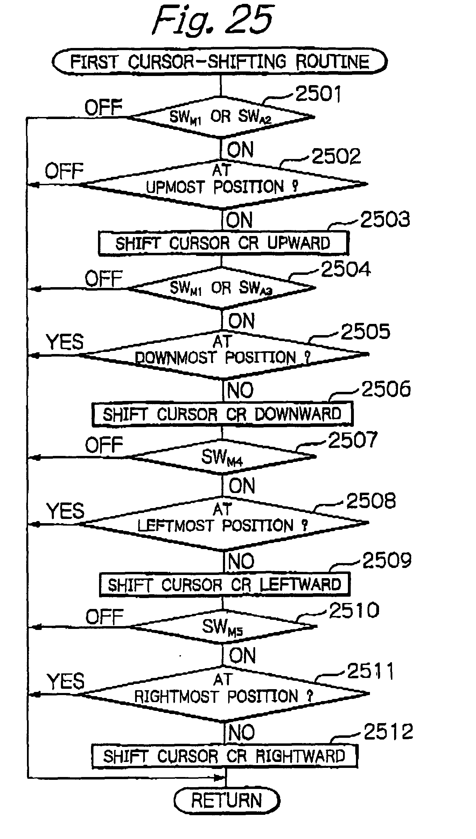

Figure 25 is a flowchart of the first cursor-shifting routine which is executed as a subroutine in steps 1806 and 1813 of the first item-display routine of Figs. 18A and 18B.

At step 2501, it is determined whether either the up-shift switch SW_{M2} or SW_{A2} is turned ON. When both the up-shift switch SW_{M2} and SW_{A2} are in an OFF-state, the control returns to either step 1806 or 1813 of the first item-display routine.

At step 2501, when it is confirmed that either the up-shift switch SW_{M2} or SW_{A2} is turned ON, the control proceeds to step 2502, in which it is determined whether the cursor CR is at the upmost position. When the cursor CR is at the upmost position, the control returns to either step 1806 or 1813 of the first item-display routine.

At step 2502, when it is confirmed that the cursor CR is not at the upmost position, the control proceeds to step 2503, in which the cursor CR is shifted upward.

At step 2504, it is determined whether either the down-shift switch SW_{M3} or SW_{A3} is turned ON. When both the down-shift switch SW_{M3} or SW_{A3} are in an OFF-state, the control returns to either step 1806 or 1813 of the first item-display routine.

At step 2504, when it is confirmed that either down-shift switch SW_{M3} or SW_{A3} is turned ON, the control proceeds to step 2505, in which it is determined whether the cursor CR is at the downmost position. When the cursor CR is at the downmost position, the control returns to either step 1806 or 1813 of the first item-display routine.

At step 2505, when it is confirmed that the cursor CR is not at the downmost position, the control proceeds to step 2506, in which the cursor CR is shifted downward.

At step 2507, it is determined whether the right-shift switch SW_{M4} is turned ON. When the right-shift switch SW_{M4} is in an OFF-state, the control returns to either step 1806 or 1813 of the first item-display routine.

At step 2507, when it is confirmed that right-shift switch SW_{M4} is turned ON, the control proceeds to step 2508, in which it is determined whether the cursor CR is at the rightmost position. When the cursor CR is at the rightmost position, the control returns to either step 1806 or 1813 of the first item-display routine.

At step 2508, when it is confirmed that the cursor CB. is not at the rightmost position, the control proceeds to step 2509, in which the cursor CR is shifted rightward.

At step 2510, it is determined whether the left-shift switch SW_{M5} is turned 0N. When the left-shift switch SW_{M5} is in an OFF-state, the control returns to either step 1806 or 1813 of the first item-display routine.

At step 2510, when it is confirmed that left-shift switch SW_{M5} is turned ON, the control proceeds to step 2511, in which it is determined whether the cursor CR is at the leftmost position. When the cursor CR is at the leftmost position, the control returns to either step 1806 or 1813 of the first item-display routine.

At step 2511, when it is confirmed that the cursor CR is not at the leftmost position, the control proceeds to step 2512, in which the cursor CR is shifted leftward.

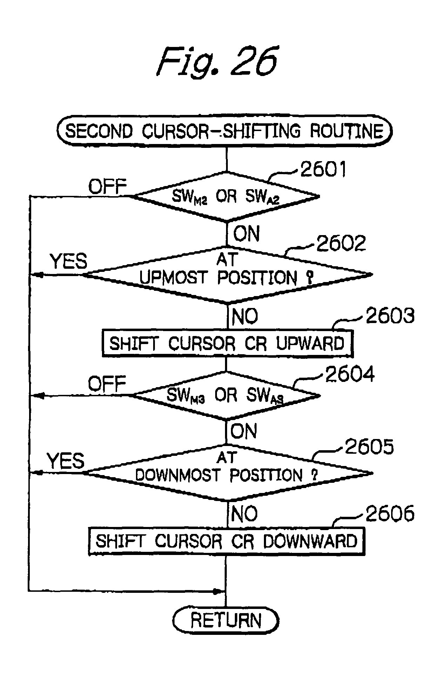

Figure 26 is a flowchart of the second cursor-shifting routine which is executed as a subroutine in step 1821 of the first item-display routine of Figs. 18A and 18B.

At step 2601, it is determined whether either the up-shift switch SW_{M2} or SW_{A2} is turned ON. When both the up-shift switch SW_{M2} and SW_{A2} are in an OFF-state, the control returns to step 1821 of the first item-display routine.

At step 2601, when it is confirmed that either the up-shift switch SW_{M2} or SW_{A2} is turned ON, the control proceeds to step 2602, in which it is determined whether the cursor CR, is at the upmost position. When the cursor CR is at the upmost position, the control returns to step 1821 of the first item-display routine.

At step 2602, when it is confirmed that the cursor CR is not at the upmost position, the control proceeds to step 2603, in which the cursor CR is shifted upward.

At step 2604, it is determined whether either the down-shift switch SW_{M3} or SW_{A3} is turned ON. When both the down-shift switch SW_{M3} or SW_{A3} are in an OFF-state, the control returns to step 1821 of the first item-display routine.

At step 2604, when it is confirmed that either down-shift switch SW_{M3} or SW_{A3} is turned ON, the control proceeds to step 2605, in which it is determined whether the cursor CR is at the downmost position. When the cursor CR is at the downmost position, the control returns to step 1821 of the first item-display routine.

At step 2605, when it is confirmed that the cursor CR is not at the downmost position, the control proceeds to step 2606, in which the cursor CR is shifted downward.

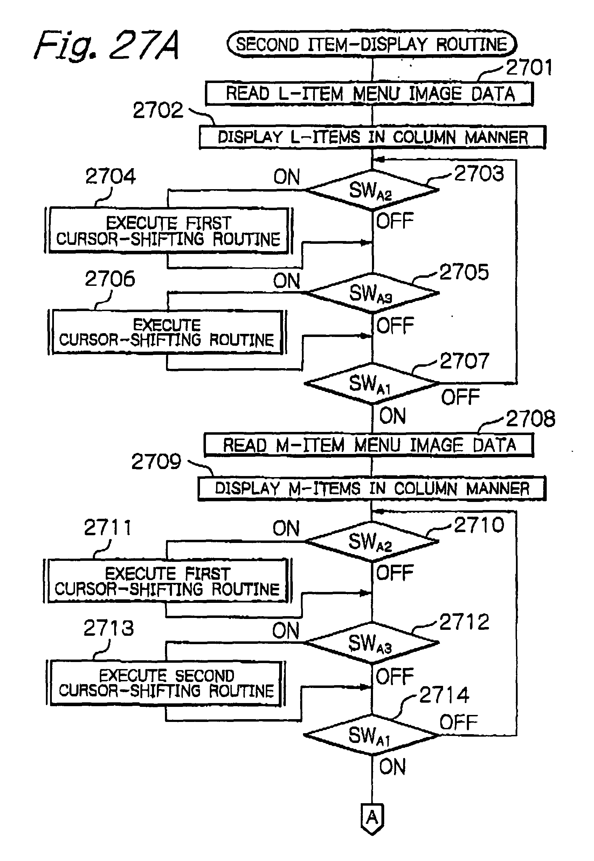

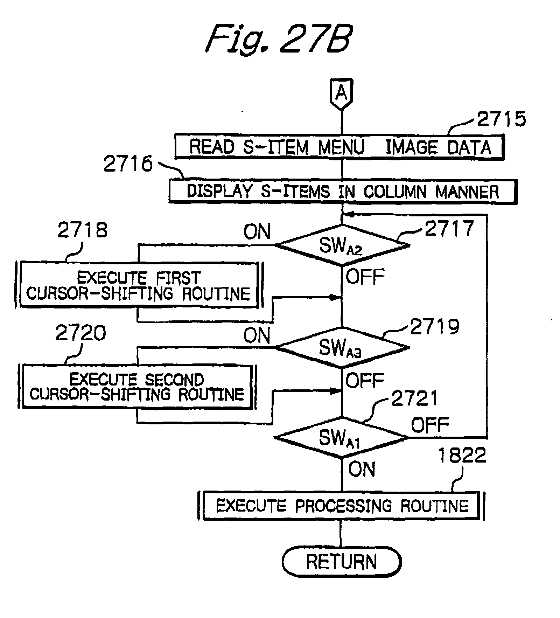

Figures 27A and 27B show a flowchart of the second item-display routine which is executed as a subroutine at step 1707 of the item-display control routine of Fig. 17.

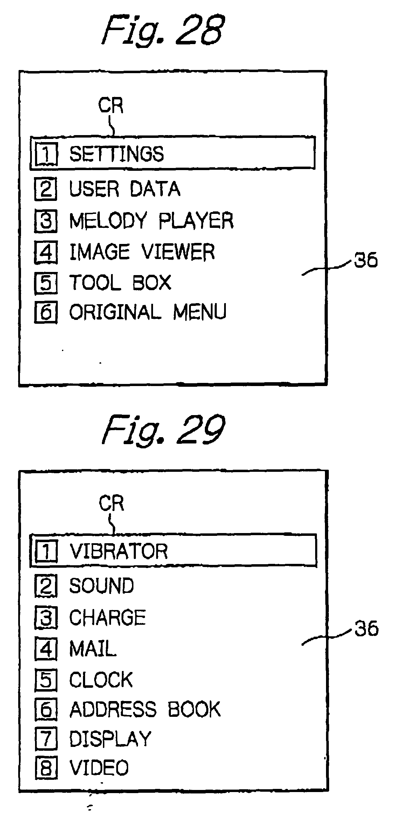

At step 2701, a frame of large-item menu image data is read from the data storage section 54. Then, at step 2702, the six large items "SETTINGS" , "USER DATA" , "MELODY PLAYER" , "IMAGE VIEWER" , "TOOL BOX" and "ORIGINAL MENU" are displayed on the main LCD panel 36 in a column manner in accordance with the read large-item menu image data, as shown in Fig. 28 by way of example. When these large items are initially displayed on the LCD panel 36, the large item "SETTINGS" is forcibly selected with a cursor CR.

At step 2701, a frame of large-item menu image data is read from the data storage section 54. Then, at step 2702, the six large items "SETTINGS" , "USER DATA" , "MELODY PLAYER" , "IMAGE VIEWER" , "TOOL BOX" and "ORIGINAL MENU" are one-dimensionally displayed on the main LCD panel 36 in an column manner in accordance with the read large-item menu image data, as shown in Fig. 28 by way of example. When these large items are initially displayed on the LCD panel 36, the large item "SETTINGS" may be forcibly selected with a cursor CR.

At step 2703, it is monitored whether the up-shift switch SW_{AZ} is turned 0N. When the up-shift switch SW_{A2} is turned 0N, the control proceeds to step 2704, in which a first cursor-shifting routine is executed. In the execution of the first cursor-shifting routine, the cursor CR is shifted upward to select one of the six large items "SETTING3" , "USER DATA" , "MELODY PLAYER" , "IMAGE VIEWER" , "TOOL BOX" and "ORIGINAL MENU" , as stated in detail hereinafter.

After the execution of the first cursor-shifting routine is completed, the control proceeds from step 2704 to step 2705. On the other hand, at step 2703, when the up-shift switch SW_{A2} is in an OFF-state, the control directly proceeds from step 2703 to step 2705.

At step 2705, it is monitored whether the down-shift switch SW_{A3} is turned 0N. When the down-shift switch SW_{A3} is turned ON, the control proceeds to step 2706, in which a second cursor-shifting routine is executed. In the execution of the second cursor-shifting routine, the cursor CR is shifted downward to select one of the six large items "SETTINGS" , "USER DATA" , "MELODY PLAYER" , "IMAGE VIEWER" , " TOOL BOX" and "ORIGINAL MENU" , as stated in detail hereinafter.

After the execution of the second cursor-shifting routine is completed, the control proceeds from 2706 to step 2707. On the other hand, at step 2705, when the down-shift switch SW_{A3} is in an OFF-state, the control directly proceeds from step 2705 to step 2707.

At step 2707, it is monitored whether the determination switch SW_{A1} is turned ON. When the determination switch SW_{A1} is in an OFF-state, the control returns to step 2703.

At step 2707, when it is confirmed that the determination SW_{A1} is turned ON, the control proceeds to step 2708, in which a frame of middle-item menu image data corresponding to a selected large item is read from the data storage section 54. Then, at step 2709, the eight middle-items "VIBRATOR," , "SOUND" , "CHARGE" , "MAIL" , "CLOCK" , "ADDRESS BOOK" , "DISPLAY" and "VOICE MEMO" are one-dimensionally displayed on the main LCD panel 36 in a column manner in accordance with the read middle-item menu image data, as shown in Fig. 29 by way of example. These middle items are initially displayed on the LCD panel 36, the middle item "VIBRATOR" may be forcibly selected with a cursor CR.

In Fig. 9, although the eight middle items are illustrated in the Fig. 9, in reality, there is the middle item "ANSWERING" as shown in Figs. 21 and 22. Note, the middle items "VIBRATOR" , "SOUND" , "CHARGE" , "MAIL" , "CLOCK" , "ADDRESS BOOK" , "DISPLAY", "VOICE MEMO" and "ANSWERING" correspond to the large item "SETTINGS" shown in Fig. 28. Namely, these nine middle items are included in the large item "SETTINGS" .

At step 2710, it is monitored whether the up-shift switch SW_{A2} is turned ON. When the up-shift switch SW_{A2} is turned 0N, the control proceeds to step 2711, in which the aforesaid first cursor-shifting routine is executed. In the execution of the first cursor-shifting routine, the cursor CR is shifted upward to select one of the nine middle items "VIBRATOR" , "SOUND" , "CHARGE" , "MAIL" , "CLOCK" , "ADDRESS BOOK" , "DISPLAY" , "VOICE MEMO" and "ANSWERING" , as stated in detail hereinafter.

After the execution of the first cursor-shifting routine is completed, the control proceeds from step 2711 to step 2712. On the other hand, at step 2710, when the up-shift switch SW_{A2} is in an OFF-state, the control directly proceeds from step 2710 to step 2712.

At step 2712, it is monitored whether the down-shift switch SW_{A3} is turned ON. When the down-shift switch SW_{A3} is turned ON, the control proceeds to step 2713, in which the aforesaid second cursor-shifting routine is executed. In the execution of the second cursor-shifting routine, the cursor CR is shifted downward to select one of the six large items "VIBRATOR" , "SOUND" , "CHAHGE" , "MAIL" , "CLOCK" , "ADDRESS BOOK" , "DISPLAY" , "VOICE MEMO" and "ANSWERING" , as stated in detail hereinafter.

After the execution of the second cursor-shifting routine is completed, the control proceeds from 2713 to step 2714. On the other hand, at step 2712, when the down-shift switch SW_{A3} is in an OFF-state, the control directly proceeds from step 2712 to step 2714.

At step 2714, it is monitored whether the determination switch SW_{A1} is turned ON. When the determination switch SW_{A1} is in an OFF-state, the control returns to step 2710.

At step 2714, when it is confirmed that the determination SW_{A1} is turned ON, the control proceeds to step 2715, in which a frame of small-item menu image data corresponding to a selected large item is read from the data storage section 54. Then, at step 2716, the five small items "VIBRATION MODE 1" , "VIBRATION MODE 2" , "VIBRATION MODE 3" , "WITH MELODY" and "OFF" are one-dimensionally displayed on the main LCD panel 36 in a column manner in accordance with the read small-item menu image data, as shown in Fig. 23. These middle items are initially displayed on the LCD panel 36, the middle item "VIBRATOR" may be forcibly selected with a cursor CR.

Note, the small items "VIBRATION MODE 1" , "VIBRATION MODE 2" , "VIBRATION MODE 3" , "WITH MELODY" and "OFF" correspond to the middle item "VIBRATOR" shown in Fig. 29. Namely, these small items (Fig. 23) are included in the middle item "VIBRATOR" .

At step 2717, it is monitored whether the up-shift switch SW_{A2} is turned ON. When the up-shift switch SW_{A2} is turned ON, the control proceeds to step 2718, in which the aforesaid first cursor-shifting routine is executed. In the execution of the first cursor-shifting routine, the cursor CR is shifted upward to select one of the small items "VIBRATION MODE 1" , "VIBBATION MODE 2" , "VIBRATION MODE 3" , "WITH MELODY" and "OFF" , as stated in detail hereinafter.

After the execution of the first cursor-shifting routine is completed, the control proceeds from 2718 to step 2719. On the other hand, at step 2717, when the up-shift switch SW_{A2} is in an OFF-state, the control directly proceeds from step 2717 to step 2719.

At step 2719, it is monitored whether the down-shift switch SW_{A3} is turned ON. When the down-shift switch SW_{A3} is turned 0N, the control proceeds to step 2720, in which the aforesaid second cursor-shifting routine is executed. In the execution of the second cursor-shifting routine, the cursor CR is shifted downward to select one of the small items "VIBRATION MODE 1" , "VIBRATION MODE 2" , "VIBRATION MODE 3" , "WITH MELODY" and "OFF" , as stated in detail hereinafter.

After the execution of the second cursor-shifting routine is completed, the control proceeds from 2720 to step 2721. On the other hand, at step 2719, when the down-shift switch SW_{A3} is in an OFF-state, the control directly proceeds from step 2719 to step 2721.

At step 2721, it is monitored whether the determination switch SW_{A1} is turned ON. When the determination switch SW_{A1} is in an OFF-state, the control returns to step 2717.

At step 2721, when it is confirmed that the determination SW_{A1} is turned ON, the control proceeds to step 2722, in which a routine for performing a processing, such as a setting, a selection, an ON processing, an OFF processing or the like, corresponding to a selected small item, is executed. For example, when the small item "VIBRATION MODE 1" is selected, a vibrator included in the vibration section 62 is operated in a vibration mode 1. Also, for example, when the small item "OFF" is selected, the operation of the vibrator is prohibited.

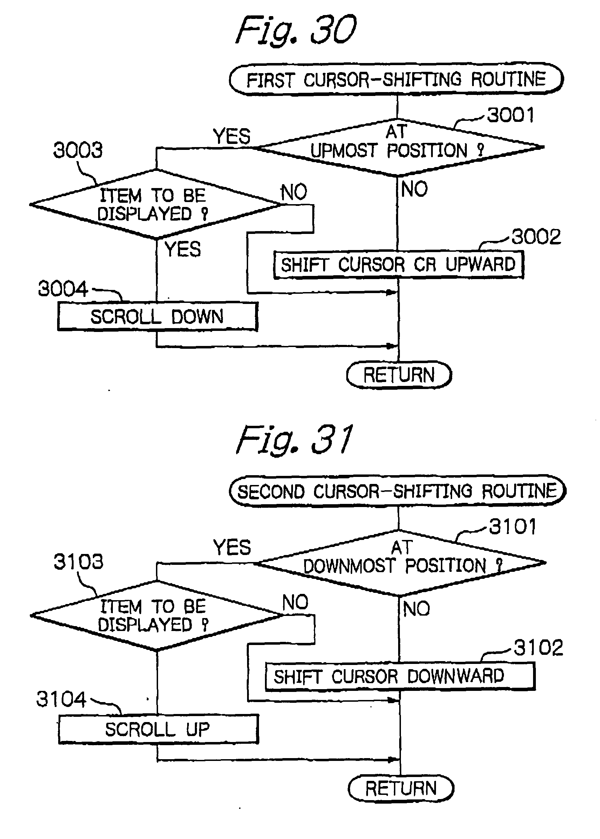

Figure 30 is a flowchart of the first cursor-shifting routine which is executed as a subroutine in either step 2704, 2711 or 2718 of the second item-display routine of Figs. 27A and 27B.

At step 3001, it is determined whether the cursor CR is at the upmost position. When it is confirmed that the cursor CR is not at the upmost position, the control proceeds to step 3002, in which the cursor CR is shifted upward.

At step 3001, when the cursor CR is at the upmost position, the control proceeds to step 3003, in which it is determined whether there remains an item to be displayed on the main LCD panel 36. When there remains no item to be displayed, the control returns to step 2704, 2711 or 2718 of the second item-display routine.

At step 3003, when it is confirmed that there remains an item to be displayed on the main LCD panel 36, the control proceeds to step 3004, in which the screen of the main LCD panel 36 is scrolled down to thereby display the item thereon.

Figure 30 is a flowchart of the first cursor-shifting routine which is executed as a subroutine in either step 2704, 2711 or 2718 of the second item-display routine of Figs. 27A and 27B.

At step 3001, it is determined whether the cursor CR is at the upmost position. When it is confirmed that the cursor CR is not at the upmost position, the control proceeds to step 3002, in which the cursor CR is shifted upward.

At step 3001, when the cursor CR is at the upmost position, the control proceeds to step 3003, in which it is determined whether there remains an item to be displayed on the main LCD panel 36. When there remains no item to be displayed, the control returns to step 2704, 2711 or 2718 of the second item-display routine.

At step 3003, when it is confirmed that there remains an item to be displayed on the main LCD panel 36, the control proceeds to step 3004, in which the screen of the main LCD panel 36 is scrolled down to thereby display the item thereon.

Figure 31 is a flowchart of the second cursor-shifting routine which is executed as a subroutine in either step 2706, 2713 or 2720 of the second item-display routine of Figs. 27A and 27B.

At step 3101, it is determined whether the cursor CR is at the downmost position. When it is confirmed that the cursor CR is not at the downmost position, the control proceeds to step 3102, in which the cursor CR is shifted downward.

At step 3101, when the cursor CR is at the downmost position, the control proceeds to step 3103, in which it is determined whether there remains an item to be displayed on the main LCD panel 36. When there remains no item to be displayed, the control returns to step 2706, 2713 or 2720 of the second item-display routine.

At step 3103, when it is confirmed that there remains an item to be displayed on the main LCD panel 36, the control proceeds to step 3104, in which the screen of the main LCD panel 36 is scrolled up to thereby display the item thereon.

Finally, it will be understood by those skilled in the art that the foregoing description is of preferred embodiments of the system, and that various changes and modifications may be made to the present invention without departing from the spirit and scope thereof.

## Claims

1. A folding-type mobile phone terminal comprising:
a first unit (10) including a first casing (16) having a manipulation board (16A) at a front wall face thereof and a manipulation system (26, 27, 28) provided at a side wall face (16B);
a second unit (12) including a second casing (32) having a display panel (36) provided at an inner wall face thereof, said display panel being controlled by manipulating said manipulation board and said manipulation system; and
a universal hinge unit (14) that hinges said first and second units to each other, such that said second unit can be at least occupy at a closed position at which said second unit is superimposed on said first unit such that said display panel is viewable, and at an opened position at which both said manipulation board and said display panel are viewable.

2. The folding-type mobile phone terminal as set forth in claim 1, wherein said manipulation system (26, 27, 28) is associated with a first switch (SW_{A1}), a second switch (SW_{A2}), and a third switch (SW_{A3}) so as to independently operate said first, second and third switches.

3. The folding-type mobile phone terminal as set forth in claim 2, wherein said manipulation system includes first, second and third keys (26, 27, 28) that operate the respective first, second third switches (SW_{A1'} SW_{A2}, SW_{A3}).

4. The folding-type mobile phone terminal as set forth in claim 2, further comprising:
a position detection system (40A, 40B, 40B, 40C, 42A, 42B, 46, 52) that detects a relative position of said first unit (12) with respect to said second unit (10); and
a display control system (66, 46) that controls said display panel (36) by operating said first, second and third switches (SW_{A1'} SW_{A2}, SW_{A3}), a control manner of said display panel by said display control system being different in accordance with a detection result of said position detection system.

5. The folding-type mobile phone terminal as set forth in claim 4, wherein items are displayed on said display panel (36) in a two-dimensional manner by operating said first switch (SW_{A1}) when said opened position is detected as the relative position of said first unit (12) with respect to said second unit (10) by said position detection system (40A, 40B, 40B, 40C, 42A, 42B, 46, 52), and wherein the items are displayed on said display panel (36) in a one-dimensional manner by operating said first switch (SW_{A1}) when said closed position is detected as the relative position of said first unit (12) with respect to said second unit (10) by said position detection system (40A, 40B, 40B, 40C, 42A, 42B, 46, 52).

6. The folding-type mobile phone terminal as set forth in claim 6, wherein each of said second and third switches (SW_{A2}, SW_{A3}) functions as a shift switch for shifting a cursor (CR), which is displayed on said display panel (36) to select one of said items.

7. The folding-type mobile phone terminal as set forth in claim 6, wherein said second and third switches (SW_{A2}, SW_{A3}) are provided for shifting said cursor (CR) in two directions opposite to each other on said display panel (36).

8. The folding-type mobile phone terminal as set forth in claim 7, wherein said second and third switches (SW_{A2}, SW_{A3}) functions as respective up-shift and down-shift switches for shifting said cursor (CR) upward and downward on said display panel (36).

9. The folding-type mobile phone terminal as set forth in claim 6, wherein said display control system (66, 46) includes a scroll system (step 3004, 3104) that scrolls a screen of said display unit (36) by operating one of said second and third switches (SW_{A2'} SW_{A3}) when said cursor (CR) is at an endmost position in a corresponding direction of said directions on said display panel (36).

10. The folding-type mobile phone terminal as set forth in claim 6, wherein the manipulation board (16A) of said first casing (16) is provided with a shift/determination key (18) which is associated with a determination switch (SW_{M1}), and at least two shift switches (SW_{M2}, SW_{M3}, SW_{M4}, SW_{M6}), to thereby control said display panel (36), and wherein said first, second and third switches (SW_{A1}, SW_{A2'} SW_{A3}) have the same functions as said determination switch (SW_{M1}) and said two shift switch (SW_{M2,} SW_{M3}) when said opened position is detected as the relative position of said first unit (12) with respect to said second unit (10) by said position detection system (40A, 408, 40B, 40C, 42A, 42B, 46, 52).
